# EUROPEAN PATENT SPECIFICATION

(11) **EP 3 929 630 B1**
(45) Date of publication and mention of the grant of the patent: **05.04.2023**
(21) Application number: 20305685.8
(22) Date of filing: 22.06.2020
(51) Int. Cl.: G01V 1/28, G01V 1/30, G01V 99/00

(54) **COMPUTER IMPLEMENTED METHOD FOR CORRECTING A RESERVOIR MODEL OF A RESERVOIR GEOLOGICAL FORMATION BASED ON SEISMIC IMAGES**
COMPUTERIMPLEMENTIERTES VERFAHREN ZUR KORREKTUR EINES RESERVOIRMODELLS EINER GEOLOGISCHEN FORMATION BASIEREND AUF SEISMISCHEN BILDERN
PROCÉDÉ MIS EN UVRE PAR ORDINATEUR POUR LA CORRECTION D'UN MODÈLE DE RÉSERVOIR D'UNE FORMATION GÉOLOGIQUE DE RÉSERVOIR SUR LA BASE D'IMAGES SISMIQUES

(43) Date of publication of application: 29.12.2021
(73) Proprietor: TotalEnergies OneTech, 92400 Courbevoie (FR)
(72) Inventor: THORE, Pierre, 64018 Pau Cedex (FR)
(74) Representative: Plasseraud IP

(56) References cited:
- WO-A1-2009/142872
- WO-A1-2011/149609
- GB-A- 2 529 693
- US-A1- 2013 215 712

## Description

### TECHNICAL FIELD

This disclosure relates to the field of reservoir geological formations modeling and exploitation and relates more particularly to a method and system for correcting a reservoir model of a reservoir geological formation.

### BACKGROUND ART

In the field of hydrocarbon (oil, natural gas, shale gas, etc.) recovery from an underground reservoir geological formation, it is known to establish a reservoir model of said reservoir geological formation. Such a reservoir model may rely on a stratigraphic grid. For instance, a reservoir grid is a type of stratigraphic grid used to simulate the flow of fluids inside the reservoir geological formation in order to be able to optimize the recovery of hydrocarbons from the reservoir geological formation, in order to e.g. predict the amount of oil that may be recovered as a function of the amount of water injected into the reservoir geological formation (see e.g. GB 2529693 A).

The stratigraphic grid represents the 3D volume of the underground reservoir geological formation as a 3D grid of cells, each cell corresponding to a volume unit of the 3D grid which may be substantially cubic or have a more complex shape. Each cell of the stratigraphic grid is mapped to a corresponding portion of the reservoir geological formation. Each cell of the stratigraphic grid may be associated to values of geological properties of the corresponding portion of the reservoir geological formation. These geological properties may be e.g. the facies (geological index), the porosity, the permeability, etc.

Also, the cells of a stratigraphic grid are usually organized in a plurality of 3D meshes referred to as layers. Typically, each layer groups cells having a same estimated geological age. Within a layer, any two adjacent cells have substantially the same estimated geological properties. The stratigraphic grid therefore corresponds to a stack of such layers which is representative of the fact that reservoir geological formations are heterogeneous vertically and mainly homogeneous laterally.

Of course, the main challenge when establishing the stratigraphic grid is to be able to have accurate 3D grid and geological properties values, i.e. values that match as much as possible the actual values of the reservoir geological formation.

In general, wells are drilled into the reservoir geological formation, and it is possible to measure the values of the geological properties along the well either using various logging techniques or by acquiring cores or plugs. These measured values are accurate in general. However, it is not possible to have such accurate measurements for the whole reservoir geological formation, since this would require drilling way too many wells. Hence, the values of the geological properties measured at wells are used to estimate values for portions located between the wells, by using interpolation techniques. However, these estimated values of the geological properties are not as accurate as the measured ones.

It is also possible to use e.g. seismic measurements in order to estimate the values of geological properties between the wells.

However, such seismic measurements provide values of geophysical properties which are not direct observations of the desired geological properties (but which depend on the desired geological properties). Also, the resolution of the seismic measurements is quite low (few tens of meters) in the vertical direction compared to the desired resolution (few meters to less than a meter). Hence, even if seismic measurements can be used to derive information on the geological properties of the reservoir geological formation between the wells, the resulting accuracy is not satisfactory.

In general, there is always a need for further improving the accuracy of stratigraphic grids by using any available measurement, or at least for being able to evaluate the accuracy of the stratigraphic grid. However, this remains a challenging task since the available measurements are either localized at the wells or are not direct observations of the desired geological properties.

### SUMMARY

The present disclosure aims at improving the situation. In particular, the present disclosure aims at overcoming at least some of the limitations of the prior art discussed above, by proposing a solution for correcting a reservoir model based on seismic measurements.

According to a first aspect, the present disclosure concerns a computer implemented method for correcting a reservoir model, said reservoir model comprising a stratigraphic grid modeling a reservoir geological formation, said stratigraphic grid corresponding to a 3D grid of cells organized in layers, said method comprising:
- obtaining a 3D image representing values of at least one physical property of the reservoir geological formation, said values of the at least one physical property obtained from seismic measurements performed on the reservoir geological formation;
- calculating a skeleton for the values of the at least one physical property, based on the 3D image;
- associating each point of the skeleton to a respective cell of the stratigraphic grid, based on the coordinates of the points of the skeleton and on the coordinates of the cells of the stratigraphic grid;
- determining one reference layer of the stratigraphic grid for at least one set of points of the skeleton;
- calculating, for each point of the at least one set, a layer gap between the reference layer and the cell associated to said point;
- correcting the reservoir model based on the layer gaps.

Hence, the present correcting method uses a 3D image comprising values of at least one physical property, obtained by performing seismic measurements on the reservoir geological formation. Different types of physical properties may be considered, as long as they are representative of the geological layers of the reservoir geological formation.

Then, the correcting method calculates a skeleton of the physical property values of the 3D image.

In shape analysis, the skeleton (or topological skeleton) of a shape is a thin version of that shape which emphasizes topological properties of the shape. There are different known algorithms for calculating such a skeleton that can be used in the present disclosure. A preferred example for the calculation of the skeleton is given by the PCT patent application N° PCT/IB2019/000790.

The skeleton is the core of the one or more physical properties of the 3D image of seismic measurements. While the 3D image is an amorphous representation of the physical property, the skeleton highlights main paths of the physical property and highlights the underlying topology of the physical property. While the seismic measurements give a set of points without organization which are spaced apart by around 25 to 50 meters in the vertical direction, the skeleton gives something which is in the form of a graph describing the topology of the physical property observed by the seismic measurements, with a vertical spacing that is substantially reduced.

By mapping the skeleton onto the stratigraphic grid, it is possible to associate each point of the skeleton to a specific cell of the stratigraphic grid.

The skeleton is basically a graph comprising branches corresponding to the main paths for the physical property of the 3D image. Accordingly, it can be assumed that, should the mapping between the stratigraphic grid and the skeleton be correct, each branch of the skeleton should correspond roughly to a single and same layer of the stratigraphic grid.

By assuming that each set of points corresponding to a branch of the skeleton should lie in a single and same reference layer, then it is possible to calculate layer gaps for each point of the skeleton. Basically, the layer gaps are representative of how much the cells of the stratigraphic grid, which are mapped to points of the skeleton, fail to comply with the assumption that each branch of the skeleton should lie in a single and same reference layer. Accordingly, the calculated layer gaps can be used to correct the reservoir model.

In specific embodiments, the correcting method can further comprise one or more of the following features, considered either alone or in any technically possible combination.

In specific embodiments, correcting the reservoir model comprises correcting the stratigraphic grid based on the calculated layer gaps.

In specific embodiments, the reservoir model comprising a seismic wave velocity field associated to the reservoir geological formation, correcting the reservoir model comprises correcting the seismic wave velocity field based on the calculated layer gaps.

In specific embodiments, correcting the reservoir model comprises determining a 3D correction grid for correcting the stratigraphic grid, said 3D correction grid being adjusted to produce no modifications in the stratigraphic grid to cells associated to one or more wells made in the reservoir geological formation. Indeed, the stratigraphic grid is generally accurate at the position along the well for the different layers, since it is based on well measurements. Accordingly, the 3D correction grid should preferably be such that it does not modify the stratigraphic grid at the wells.

In specific embodiments, the correcting method comprises decomposing the skeleton in a plurality of sets of points associated to different sets of layer values, determining one reference layer for each set of points of the skeleton, and calculating a layer gap for each point of each set of points based on the reference layer associated to said set of points.

In specific embodiments, the correcting method comprises converting the skeleton into depth scale prior to associating each point of the skeleton to a cell of the stratigraphic grid, the skeleton being initially in time scale.

In specific embodiments, the layer gap for a point of the skeleton is calculated as the difference between the depth of the reference layer and the depth of the cell associated to said point.

In specific embodiments, the correcting method comprises converting the stratigraphic grid into time scale prior to associating each point of the skeleton to a cell of the stratigraphic grid, the stratigraphic grid being initially in depth scale.

In specific embodiments, the layer gap for a point of the skeleton is calculated as the difference between the time of the reference layer and the time of the cell associated to said point.

In specific embodiments, the conversion in time scale or depth scale is done using a seismic wave velocity field of the reservoir model.

In specific embodiments, calculating a skeleton comprises applying a predetermined threshold in order to identify significant values of the at least one physical property in the 3D image, the skeleton being calculated based on said significant values of the at least one physical property.

In specific embodiments, the 3D image corresponds to a 4D seismic image wherein the at least one physical property is a time lapse property representative of the variation of the reservoir geological formation between seismic measurements separated in time.

In specific embodiments, the time lapse property is one among relative seismic wave velocity change, relative acoustic impedance change, relative density change, relative time strain change and water saturation change.

According to a second aspect, the present disclosure concerns a computer program product comprising instructions which, when executed by at least one processor, configure said at least one processor to carry out a correcting method according to any one of the embodiments of the present disclosure.

According to a third aspect, the present disclosure concerns a computer-readable storage medium comprising instructions which, when executed by at least one processor, configure said at least one processor to carry out a correcting method according to any one of the embodiments of the present disclosure.

According to a fourth aspect, the present disclosure concerns a computer system for correcting a reservoir model modeling a reservoir geological formation, said computer system comprising at least one processor configured to carry out a correcting method according to any one of the embodiments of the present disclosure.

### BRIEF DESCRIPTION OF DRAWINGS

The invention will be better understood upon reading the following description, given as an example that is in no way limiting, and made in reference to the figures which show:
- Figure 1: a flow chart illustrating the main steps of a method for correcting a reservoir model of a reservoir geological formation;
- Figure 2: a perspective view of a 3D image representing a physical property obtained from seismic measurements;
- Figure 3: a perspective view of a skeleton calculated based on the physical property illustrated in figure 2;
- Figure 4: a perspective view of a stratigraphic grid associated to the same reservoir geological formation as the physical property illustrated in figure 2;
- Figure 5: a 2D schematic view illustrating the mapping between points of the skeleton and layers of the stratigraphic grid;
- Figure 6: a 2D correction map for correcting the stratigraphic grid of the reservoir model;
- Figure 7: a 2D correction map obtained by adjusting the 2D correction map of figure 6.

### DESCRIPTION OF EMBODIMENTS

As discussed above, the present disclosure relates inter alia to a method 90 and system for correcting a reservoir model modeling a reservoir geological formation exploited for recovering hydrocarbons (oil, natural gas, shale gas, etc.) by means of at least one well.

In the present disclosure, the reservoir model corresponds generally to information describing the reservoir geological formation. The reservoir model comprises at least a stratigraphic grid, in which case correcting the reservoir model may consist in correcting the stratigraphic grid. In some embodiments, the reservoir model may also comprise a predetermined seismic wave velocity field representing the seismic wave velocity inside the reservoir geological formation. In such a case, correcting the reservoir model may consist in either correcting the stratigraphic grid or correcting the seismic wave velocity field.

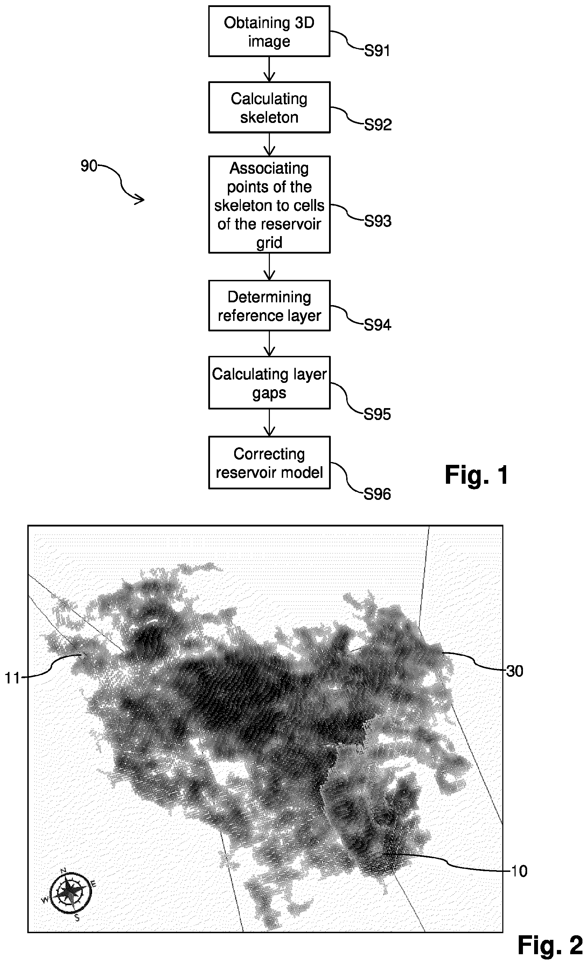

Figure 1 represents schematically the main steps of an exemplary embodiment of a method 90 for correcting a reservoir model modeling a reservoir geological formation.

The correcting method 90 is carried out by a computer system (not represented in the figures). In preferred embodiments, the computer system comprises one or more processors (which may belong to a same computer or to different computers) and storage means (magnetic hard disk, optical disk, electronic memory, or any computer readable storage medium) in which a computer program product is stored, in the form of a set of program-code instructions to be executed in order to implement all or part of the steps of the correcting method 90. Alternatively, or in combination thereof, the computer system can comprise one or more programmable logic circuits (FPGA, PLD, etc.), and/or one or more specialized integrated circuits (ASIC), etc., adapted for implementing all or part of said steps of the correcting method 90. In other words, the computer system comprises a set of means configured by software (specific computer program product) and/or by hardware (processor, FPGA, PLD, ASIC, etc.) to implement the steps of the correcting method 90.

As illustrated in Figure 1, the correcting method 90 comprises a step S91 of obtaining a 3D image representing values of at least one physical property of the reservoir geological formation, said values obtained from seismic measurements performed on the reservoir geological formation.

The present disclosure can be applied with different types of physical properties observed through seismic measurements.

For instance, from seismic measurements, three different elastic physical properties can be extracted: the density (*ρ*), the compressional seismic wave velocity (*Vp*) and the shear seismic wave velocity (*Vs*)*.* These elastic physical properties may be considered for the 3D image. Also, these elastic physical properties can be rearranged in various manners known to the skilled person. For example, these elastic physical properties may be rearranged to define other suitable physical properties such as the compressional acoustic impedance (*Ip* = *ρVp*) and the shear acoustic impedance (*Is* = *ρVs*)*.* These elastic physical properties can also be rearranged as other suitable physical properties such as a poisson-ratio (which is a complex mixture of *Vp* and *Vs*), or or as a density shear modulus, a bulk modulus, etc.

Also, it is possible to transform these elastic physical properties into petrophysical properties by using, for example, supervised classification techniques relying on measurements made at the wells for supervision. For instance, in a shale-sand environment, it is possible to construct some approximate porosity, or a pseudo VClay. A pseudo VClay is the percentage of clay compared to the percentage of sand at each volume unit. In the context of carbonate, it is possible to derive a pseudo porosity, strongly connected to the impedance *Ip,* and/or some probability of carbonate versus dolomite, etc.

Any of the above mentioned non-limitative examples of physical properties may be considered for the 3D image, depending on the context.

A preferred non-limitative example of suitable 3D images corresponds to 4D seismic images. A 4D seismic image corresponds basically to a 3D image which represents time lapse property values representative of the variation of the reservoir geological formation between seismic measurements performed on said reservoir geological formation and separated in time by a time lapse interval. Hence, in a 4D seismic image, the fourth dimension corresponds to time. In practice, first seismic measurements are performed at a first calendar date, for instance before starting hydrocarbon recovery from the reservoir geological formation. Second seismic measurements are performed at a second calendar date, for instance one or more years after the first calendar date. The time lapse property values of the 4D seismic image therefore represent the variation of a physical property in the 3D volume of the reservoir geological formation between the first calendar date and the second calendar date. The time lapse property considered may vary but, regardless the type of time lapse property considered, the time lapse property values will highlight how the reservoir geological formation has been modified by its exploitation, i.e. by hydrocarbon recovery. For instance, in case of oil recovery performed by injecting water into the reservoir geological formation (through an injection well), then the values of the 4D seismic image will highlight where, in the 3D volume of the reservoir geological model, the oil has been replaced by water, and thus these time lapse property values will be non-null only where the water has been able to flow, i.e. along the fluid flow paths inside the reservoir geological formation. For instance, the time lapse property values of the 4D seismic image may correspond to e.g.:
- relative seismic wave velocity change (Δ*V*/*V*) values, representative of the variation of the seismic wave velocity *V*;
- relative acoustic impedance change (*ΔI_{P}*/*I_{P}*) values, representative of the variation of the acoustic impedance *I_{P};*
- relative density change (*Δρ*/*ρ*) values, representative of the variation of the rock density *ρ*;
- relative time strain change (Δτ/τ) values, representative of the variation of the time strain τ, wherein Δτ/τ ≈ -Δ*V*/*V*;
- water saturation change (Δ*S_{W}*) values, representative of the variation of the water saturation *S_{W};* etc.

Figure 2 represents an example of a 3D image which corresponds to a 4D seismic image representing relative seismic wave velocity change values.

Figure 2 also shows an injection well 10 used for hydrocarbon recovery from the reservoir geological formation. The injection well 10 is used for injecting a fluid into the reservoir geological formation, while the hydrocarbons may be recovered at a production well 11.

As indicated above, the values of the 4D seismic image are null where there have been no variations of the physical property considered, and the null values are not represented in figure 2. By "null values", we mean values that are below a measurement noise level, such that the null values are those that cannot be distinguished from noise. As illustrated by figure 2, the non-null values form a complex 3D shape 30 that is representative of the 3D volume, inside the reservoir geological formation, in which the injected fluid was able to flow from the injection well 10.

In some embodiments, it is possible to apply a predetermined threshold on the values of the 3D image in order to identify significant values of the 3D image. For instance, the threshold may be set to half the most significant value of the 3D image. Hence, by doing so, a filtered 3D image is obtained which represents the 3D shape (volumetric distribution) of the most significant values of the physical property inside the reservoir geological formation.

For instance, the 3D image represents a 3D volume the dimensions of which are laterally 2 kilometers (km) by 2 km and vertically 100 meters (m). Each volume unit of the 3D image which may be substantially cubic (i.e. voxel) or have a more complex shape. Typically, each volume unit of the 3D image represents a corresponding portion of the 3D volume of the reservoir geological formation that has a dimension in the vertical direction that is around 25 m to 50 m. Indeed, the physical property represented is almost continuous laterally but has an uncertainty on the thickness which is around 25 m to 50 m while a vertical resolution of few meters to less than a meter is desired for the stratigraphic grid.

Hence, the 3D image, such as the 4D seismic image represented in figure 2 is interesting but has an insufficient vertical resolution, such that said 3D image is difficult to map as such onto the stratigraphic grid. Also, this 3D image is amorphous from a topological point of view.

As illustrated by figure 1, the analyzing method 90 comprises a step S92 of calculating a skeleton for the values of the at least one physical property of the 3D image obtained in step S91.

Skeletons are known from the field of shape analysis and have several different mathematical definitions in the scientific literature. There are different algorithms for computing them that can be used during step S92. A preferred example for the calculation of the skeleton in the context of geological data is given by the PCT patent application N° PCT/IB2019/000790.

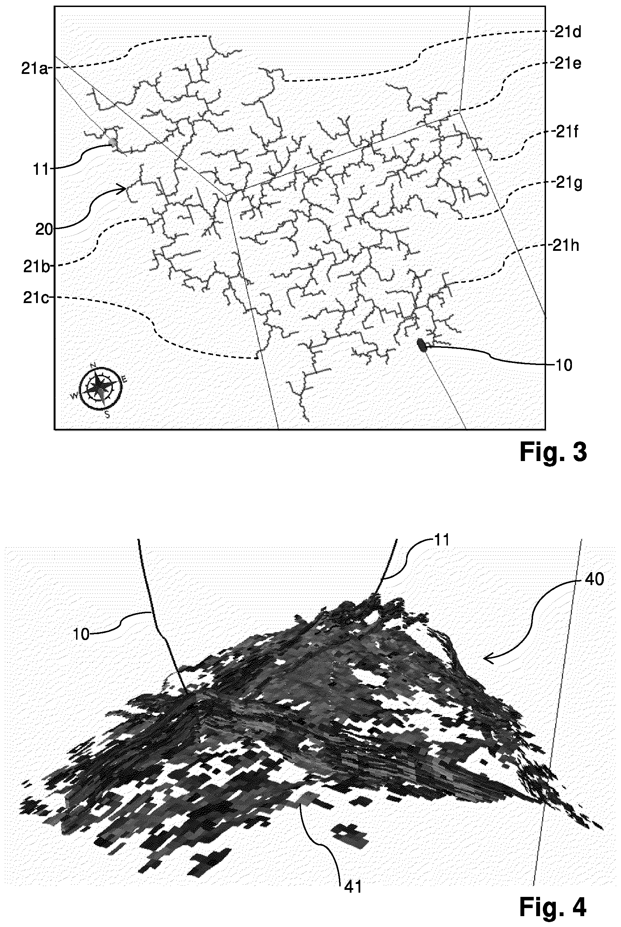

Figure 3 represents schematically the skeleton 20 of the values of the 4D seismic image of figure 2. It should be noted that applying a predetermined threshold to the values in order to obtain a filtered 3D image facilitates and accelerates the calculation of the skeleton 20.

As can be seen in figure 3, the skeleton 20 extends between the injecting well 10, which corresponds to the origin of the fluids injected into the reservoir geological formation, and a plurality of extremities 21a-21h. For clarity purposes, not all extremities of the skeleton 20 represented in figure 3 have been labelled with specific reference signs. The extremities of the skeleton 20 correspond to the different portions of the 3D volume of the reservoir geological formation that have been reached by the injected fluid.

As can be seen in figure 3, the skeleton 20 corresponds to a collection of interconnected points, or graph, describing the topology of the fluid flow paths inside the reservoir geological formation, from the origin (injecting well 10) to all the extremities 21a-21h.

As indicated above, the stratigraphic grid represents the 3D volume of the reservoir geological formation as a 3D grid of cells, each cell corresponding to a volume unit of the 3D grid which may be substantially cubic or have a more complex shape. Each cell of the stratigraphic grid is mapped to a corresponding portion of the reservoir geological formation. Each cell of the stratigraphic grid is associated to values of geological properties (facies, porosity, permeability, etc.) of the corresponding portion of the reservoir geological formation.

Figure 4 represents a schematic view of a stratigraphic grid 40 in 3D, the stratigraphic grid 40 being associated to the same reservoir geological formation as the 3D image represented in Figure 2.

As can be seen in figure 4, the stratigraphic grid 40 is composed of a plurality of cells 41. It should be noted that not all the cells 41 of the stratigraphic grid 40 are represented in figure 4, mainly for clarity purposes. Figure 4 represents only the cells 41 having a porosity indicating that the corresponding portion of the reservoir geological formation can be travelled through by a fluid. For example, the dimension represented by each cell in the vertical direction may correspond to around 1 m in the 3D volume of the reservoir geological formation. It should be noted that the dimensions represented by the cells 41, including in the vertical direction, may vary slightly from a cell to another.

Also, the cells 41 of the stratigraphic grid 40 are organized in a plurality of 3D meshes referred to as layers, each layer grouping cells having a same estimated geological age. Within a layer, any two adjacent cells have substantially the same estimated geological properties. The stratigraphic grid 40 therefore corresponds to a stack of such layers. In practice, each geological layer of the reservoir geological formation is represented in the stratigraphic grid by a single layer of said stratigraphic grid or a by a plurality of superposed layers of the stratigraphic grid.

As can be seen in figure 1, the correcting method 90 comprises a step S93 of associating each point of the skeleton 20 to a cell of the stratigraphic grid.

Indeed, each point of the skeleton 20 has coordinates in the 3D image that can be matched to respective coordinates in the stratigraphic grid. Accordingly, each point of the skeleton 20 can be matched to a respective cell of the stratigraphic grid.

The coordinates of either a point of the skeleton 20 or of a cell of the stratigraphic grid can correspond e.g. to coordinates in a horizontal plane combined with a coordinate along a vertical axis.

It should be noted that the coordinates in the 3D image and in the stratigraphic grid 40 may be expressed using different reference frames and/or different scales, such that it might be necessary to perform a conversion of the coordinates of a point of the skeleton 20 in order to find the coordinates of the corresponding cell of the stratigraphic grid. Usually, the vertical axis (at least) of a 3D image uses a time scale (e.g. expressed in seconds) since seismic measurements measure propagation times of seismic waves. In turn, the vertical axis of a stratigraphic grid usually uses a depth scale (e.g. expressed in meters). In that case, it is necessary to e.g. either convert the time scale of the vertical axis of the skeleton 20 into a depth scale or to convert the depth scale of the vertical axis of the stratigraphic grid into a time scale, in order to identify the cells of the stratigraphic grid which correspond to the points of the skeleton 20.

If required, such a conversion may use a predetermined (compressional) seismic wave velocity field of the reservoir model. Such a seismic wave velocity field is usually obtained from well measurements, such that the seismic wave velocity field is very accurate at the wells, but less accurate between the wells where it is obtained by e.g. interpolating the well measurements.

Of course, if the 3D image and the stratigraphic grid use the same scales and/or reference frames, then no conversion is required.

As illustrated in figure 1, the correcting method 90 comprises a step S94 of determining one reference layer for at least one set of points of the skeleton 20.

Since the skeleton 20 is a graph comprising branches corresponding to the main paths for the physical property of the 3D image, it can be assumed that, should the stratigraphic grid be correct (or the seismic wave velocity field in case a time-depth conversion was required), each branch (which corresponds to a set of points) of the skeleton 20 should lie in a single and same layer of the stratigraphic grid, because of the lateral continuity of the geology.

Hence, step S94 of the correcting method 90 aims at identifying, for each branch of the skeleton 20, the layer, referred to as reference layer, that most likely corresponds to the single and same layer in which said branch of the skeleton 20 should lie entirely.

For instance, the values of the geological properties of the stratigraphic grid may be used to determine the reference layer. For instance, it is possible to select, as the reference layer, the layer of a cell associated to a point of the branch of the skeleton 20 that has the highest permeability or porosity associated thereto.

In preferred embodiments, it is possible to determine the reference layer of the stratigraphic grid based on the layers of the cells associated to the points of the branch of the skeleton 20.

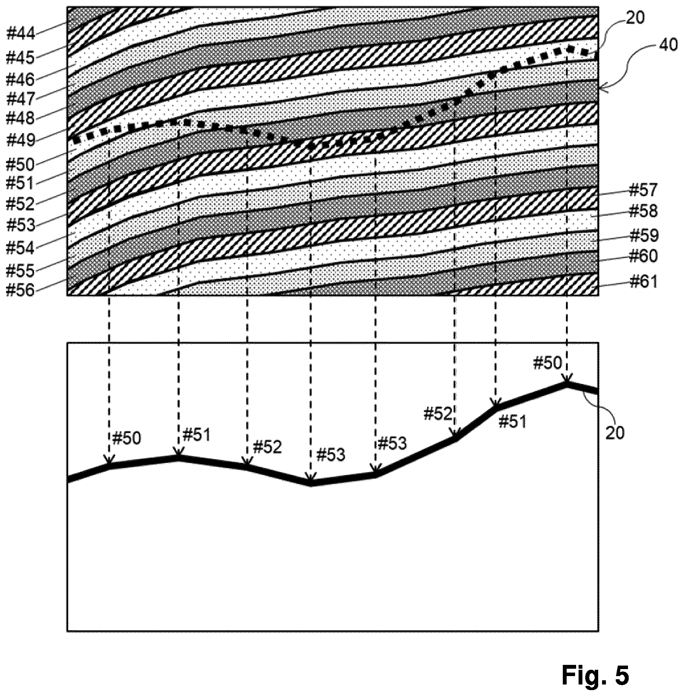

The upper part of figure 5 represents a cross sectional schematic partial view of the stratigraphic grid 40 in a vertical plane, highlighting several stacked layers numbered from #44 to #61. For clarity purposes, the cells are not represented in figure 5. The lower part of figure 5 represents a portion of a branch of the skeleton 20 that lies in the same vertical plane as the one considered in the upper part of figure 5 and has been mapped to the same portion of said vertical plane. As can be seen in figure 5, the successive interconnected points of the skeleton 20, from the left part to the right part of figure 5, are associated respectively to cells of the layers #50, #51, #52, #53, #53, #52, #51 and #50 of the stratigraphic grid 40.

Of course, in practice, it is unlikely that a branch of the skeleton 20 will lie in a (vertical) plane, as assumed in figure 5. This assumption in figure 5 that there exists a branch of the skeleton 20 that lies in the vertical plane is made only to illustrate in 2D how the points of the skeleton 20 are mapped to respective layers of the stratigraphic grid 40. However, these explanations assuming a 2D branch of the skeleton 20 can be extended to any 3D branch that will similarly span a plurality of layers of the stratigraphic grid 40.

For instance, the reference layer may be set to the layer which has the highest number of cells associated to points of the branch of the skeleton 20. According to another example, the reference layer may correspond to the mean or median value of the layers of the cells associated to the points of the branch of the skeleton 20, eventually rounded to the closest integer value, etc. According to another example, the values of the geological properties of the stratigraphic grid may be used to discard, in the determination of the reference layer, the cells of layers that are unlikely to correspond to a fluid flow path, e.g. layers of the stratigraphic grid having a very low permeability (e.g. layers corresponding to clay). The remaining layers of cells associated to points of the branch of the skeleton 20 may then be used to determine the reference layer, for instance as discussed above.

In practice, said reference layer is set for at least one set of points of the skeleton 20 which corresponds to a branch of the skeleton 20. The skeleton 20 can be decomposed in a plurality of sets of points (e.g. a plurality of branches) associated to different respective sets of layer values. In that case, it is possible to determine a reference layer for each set of points of the skeleton.

As can be seen in figure 1, the correcting method then comprises a step S95 of calculating, for each point of each set of points of the skeleton, a layer gap between the reference layer determined for this set of points (in step S94) and the cell associated to this point (in step S93).

The layer gap calculated for a point of the skeleton 20 corresponds to the vertical distance between, on one hand, the cell of the stratigraphic grid 40 associated to said point and, on the other hand, the reference layer. It should be noted that vertical distance represented by the layer gap may be e.g. a time distance if the vertical axis of the stratigraphic grid 40 is in time scale or a depth distance if the vertical axis of the stratigraphic grid 40 is in depth scale.

In other words, the layer gap calculated for a point of the skeleton 20 represents the time needed by a seismic wave to travel vertically from the cell associated to said point to the reference layer or, equivalently, the distance traveled vertically by a seismic wave to reach the reference layer from the cell associated to said point.

Although referred to as a distance, the layer gap may be positive or negative, and the sign of the layer gap indicates whether the cell associated to said point is above or below the reference layer.

For instance, if the layer of the cell of the stratigraphic grid 40 associated to the considered point of the skeleton corresponds to layer #50 while the reference layer determined for said point corresponds to layer #52 (which is assumed to below layer #50), then the layer gap may be calculated as follows:
- if the vertical axis of the stratigraphic grid 40 is in time scale, assuming that the cell associated to said point has a time coordinate t1 and that the cell of the reference layer that is vertically aligned with said cell associated to said point of the skeleton 20 has a time coordinate t2 > t1 (since layer #52 is below layer #50), then the layer gap corresponds to (t2 - t1) (and is negative);
- if the vertical axis of the stratigraphic grid 40 is in depth scale, assuming that the cell associated to said point has a depth coordinate z1 and that the cell of the reference layer that is vertically aligned with said cell associated to said point of the skeleton 20 has a depth coordinate z2 > z1 (since layer #52 is below layer #50), then the layer gap corresponds to (z2 - z1) (and is negative).

As can be seen in figure 1, the correcting method 90 then comprises a step S96 of correcting the reservoir model based on the calculated layer gaps.

Indeed, the layer gaps are representative of how much the cells of the stratigraphic grid 40, which are mapped to points of the skeleton 20, fail to comply with the assumption that each branch of the skeleton 20 should lie in a single and same layer, assumed to be the determined reference layer. Accordingly, the calculated layer gaps can be used to correct the stratigraphic grid, or the seismic wave velocity field if a time-depth conversion was required, in order to reduce or even cancel the layer gaps.

For instance, it is possible to calculate a 3D correction grid that is then applied to the stratigraphic grid 40 that modifies the 3D grid of the stratigraphic grid in the vertical direction such that, after modification, reassociating layers to the points of the skeleton 20 would result in all the points of a same branch of the skeleton 20 being associated to respective cells of the same and single reference layer.

Such a correction may be performed either in time-domain or in depth-domain, i.e. on the stratigraphic grid with its vertical axis in time scale or in depth scale. Such a correction aims at displacing the cells of the stratigraphic grid based on the layer gaps calculated.

It is understood that layer gaps are calculated in step S95 only for some cells of some layers of the stratigraphic grid 40. However, the calculated layer gaps may be e.g. interpolated in the vertical and/or lateral directions in order to obtain layer gaps for all or part of the cells of the stratigraphic grid 40. Such an interpolation may use any known interpolation method, such as kriging methods.

In the vertical direction, the layer gap calculated for a cell associated to a given point of the skeleton 20 may for instance be used to determine the layer gaps for all the cells that are vertically aligned. By "cells vertically aligned" we mean cells that have the same coordinates in the horizontal plane. For instance, the layer gap may be the same for all cells vertically aligned, for instance equal to the layer gap calculated in step S95 for the considered cell. According to another example, the layer gap may be maximum for the cell of the reference layer that is vertically aligned with the considered cell (for instance equal to the layer gap calculated in step S95 for this considered cell), and may be smoothly attenuated for the vertically aligned cells above and below, such that the layer gap for a vertically aligned cell far from the reference layer is lower in absolute value than the layer gap for a vertically aligned cell close to the reference layer. The layer gaps calculated or interpolated for all or parts of the cells of the stratigraphic grid 40 form a 3D correction grid that can be applied to the stratigraphic grid 40 in order to obtain a corrected stratigraphic grid having a 3D grid that matches the seismic measurements provided by the 3D image.

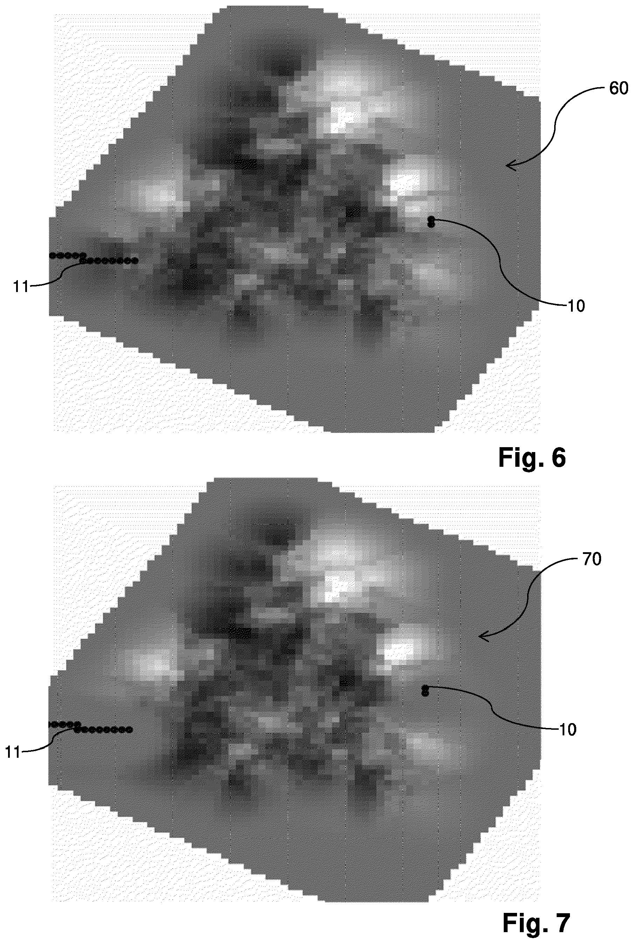

Figure 6 represents a 2D correction map obtained based on the stratigraphic grid 40 of figure 4 and the skeleton of figure 3. The 2D correction map represented in figure 6 corresponds to the corrections (layer gaps) of the 3D correction grid that to be applied to the cells of the stratigraphic grid that belong to the reference layer. If the cell of the stratigraphic grid 40 is positioned below where it should be to comply with the seismic measurements, a negative correction is applied, represented in figure 6 by a dark color. On the contrary, if the cell of the stratigraphic grid is positioned above where it should be to comply with the seismic measurements, a positive correction is applied, represented by a light color in figure 6. Cells that need not to be modified are represented in figure 6 by a gray color.

Preferably, the 3D correction grid is adjusted to produce no modifications in the stratigraphic grid 40 to cells associated to one or more wells 10, 11 made in the reservoir geological formation. Indeed, well data is reliable data. Due to the interpolation performed on the calculated layer gaps, the resulting 3D correction grid might introduce modifications to the cells associated to the wells, and such modifications are prevented by adjusting the 3D correction grid. Figure 7 represents a 2D correction map 70 obtained after adjustment of the initial 2D correction map 60 illustrated in figure 6. As can be seen in figure 7, the 2D correction map 70 does not modify the stratigraphic grid around the wells 10 and 11.

Preferably, the corrected stratigraphic grid should have its vertical axis in depth scale. Hence, if the stratigraphic grid is corrected in time-domain, then the corrected stratigraphic grid may be converted back to depth-domain by using the same seismic wave velocity field that was used for converting the initial stratigraphic grid to time-domain.

It should be noted that, instead of correcting the stratigraphic grid 40, it is possible to correct instead the seismic wave velocity field used to perform the time-depth conversion. For that purpose, if the original stratigraphic grid is in depth-domain, it is possible to convert the original stratigraphic grid to time-domain, where it is corrected based on the calculated layer gap values. Then the seismic wave velocity field is corrected based on the corrected time-domain stratigraphic grid and based on the original depth-domain stratigraphic grid. The corrected seismic wave velocity field is such that the corrected time-domain stratigraphic grid, when converted to depth-domain using the corrected seismic wave velocity field, is identical to the original depth-domain stratigraphic grid. In such a case, the original depth-domain stratigraphic grid is not modified or corrected, and the corrected time-domain stratigraphic grid is used only to correct the seismic wave velocity field. In other words, only the seismic wave velocity field is updated in the reservoir model. Future time-domain seismic measurements can be directly mapped to the original depth-domain stratigraphic grid by using the corrected seismic wave velocity field.

To summarize, when a time-depth conversion is required (because the 3D image is in time domain while the stratigraphic grid is in depth-domain), then there exist several possibilities for correcting the reservoir model.

In a first example, the 3D image and/or the skeleton 20 may be converted to depth-domain using the seismic wave velocity field of the reservoir model. The calculated layer gaps, in depth domain, may be used to correct and update the depth-domain stratigraphic grid 40 of the reservoir model. The seismic wave velocity field of the reservoir model is not corrected or updated.

In a second example, the depth-domain stratigraphic grid may be converted to time-domain using the seismic wave velocity field of the reservoir model. The calculated layer gaps, in time-domain, may be used to correct the time-domain stratigraphic grid, and the corrected time-domain stratigraphic grid may be converted back to depth-domain using the same seismic wave velocity field. The corrected depth-domain stratigraphic grid is used to update the reservoir model. The seismic wave velocity field of the reservoir model is not corrected or updated.

In a third example, the depth-domain stratigraphic grid may be converted to time-domain using the seismic wave velocity field of the reservoir model. The calculated layer gaps, in time-domain, may be used to correct the time-domain stratigraphic grid. The corrected time-domain stratigraphic grid (with the original depth-domain stratigraphic grid) is used to correct and update the seismic wave velocity model of the reservoir model. The corrected time-domain stratigraphic grid needs not to be converted back to depth-domain, and the original depth-domain stratigraphic grid is not corrected or updated.

It is emphasized that the present invention is not limited to the above exemplary embodiments. There can be improvements and modifications made of the present invention described above as long as they fall within the scope of the invention as set forth in the accompanying claims.

For instance, the present disclosure has been provided by considering mainly the case of a single skeleton calculated from the 3D image. However, it is also possible to calculate two or more skeletons from the 3D image, which may correspond for instance to skeletons associated to different injection wells, etc.

## Claims

1. - Computer implemented method (90) for correcting a reservoir model, said reservoir model comprising a stratigraphic grid (40) modeling a reservoir geological formation, said stratigraphic grid corresponding to a 3D grid of cells organized in layers, said reservoir model being used for hydrocarbon recovery from the reservoir geological formation, said method comprising:
- (S91) obtaining a 3D image representing values of at least one physical property of the reservoir geological formation, said values of the at least one physical property obtained from seismic measurements performed on the reservoir geological formation;
said method being **characterized in that** it comprises:
- (S92) calculating a skeleton (20) for the values of the at least one physical property, based on the 3D image, said skeleton corresponding to interconnected points describing the topology of the at least one physical property;
- (S93) associating each point of the skeleton to a respective cell of the stratigraphic grid, based on the coordinates of the points of the skeleton and on the coordinates of the cells of the stratigraphic grid;
- (S94) determining one reference layer of the stratigraphic grid for at least one set of points of the at least one skeleton;
- (S95) calculating, for each point of the at least one set, a layer gap between the reference layer and the cell associated to said point;
- (S96) correcting the reservoir model based on the layer gaps.

2. - Method (90) according to claim 1, wherein correcting the reservoir model comprises correcting the stratigraphic grid based on the calculated layer gaps.

3. - Method (90) according to claim 1 or 2, wherein, the reservoir model comprising a seismic wave velocity field associated to the reservoir geological formation, correcting the reservoir model comprises correcting the seismic wave velocity field based on the calculated layer gaps.

4. - Method (90) according to any one of the preceding claims, wherein correcting the reservoir model comprises determining a 3D correction grid for correcting the stratigraphic grid, said 3D correction grid being adjusted to produce no modifications in the stratigraphic grid to cells associated to one or more wells made in the reservoir geological formation.

5. - Method (90) according to any one of the preceding claims, comprising decomposing the skeleton (20) in a plurality of sets of points associated to different sets of layer values, determining one reference layer for each set of points of the skeleton, and calculating a layer gap for each point of each set of points based on the reference layer associated to said set of points.

6. - Method (90) according to any one of the preceding claims, comprising converting the skeleton (20) into depth scale prior to associating each point of the skeleton to a cell of the stratigraphic grid (40), the skeleton being initially in time scale.

7. - Method (90) according to claim 6, wherein the layer gap for a point of the skeleton (20) is calculated as the difference between the depth of the reference layer and the depth of the cell associated to said point.

8. - Method (90) according to any one of claims 1 to 5, comprising converting the stratigraphic grid (40) into time scale prior to associating each point of the skeleton (20) to a cell of the stratigraphic grid (40), the stratigraphic grid being initially in depth scale.

9. - Method (90) according to claim 8, wherein the layer gap for a point of the skeleton (20) is calculated as the difference between the time of the reference layer and the time of the cell associated to said point.

10. - Method (90) according to any one of claims 6 to 9, wherein the conversion in time scale or depth scale is done using a seismic wave velocity field of the reservoir model.

11. - Method (90) according to any one of the preceding claims, wherein calculating a skeleton (20) comprises applying a predetermined threshold in order to identify significant values of the at least one physical property in the 3D image, the skeleton (20) being calculated based on said significant values of the at least one physical property.

12. - Method (90) according to any one of the preceding claims, wherein the 3D image corresponds to a 4D seismic image wherein the at least one physical property is a time lapse property representative of the variation of the reservoir geological formation between seismic measurements separated in time.

13. - Computer program product comprising instructions which, when executed by at least one processor, configure said at least one processor to carry out a correcting method (90) according to any one of the preceding claims.

14. - Computer-readable storage medium comprising instructions which, when executed by at least one processor, configure said at least one processor to carry out a correcting method (90) according to any one of claims 1 to 12.

15. - Computer system for correcting a reservoir model modeling a reservoir geological formation, said computer system comprising at least one processor configured to carry out a correcting method (90) according to any one of claims 1 to 12.

## Patentansprüche

1. Computerimplementiertes Verfahren (90) zum Korrigieren eines Reservoir-Modells, wobei das Reservoir-Modell ein stratigrafisches Gitter (40) umfasst, welches eine geologische Reservoir-Formation modelliert, wobei das stratigrafische Gitter einem 3D-Gitter von in Schichten organisierten Zellen entspricht, wobei das Reservoir-Modell für eine Kohlenwasserstoff-Gewinnung aus der geologischen Reservoir-Formation verwendet wird, wobei das Verfahren umfasst:
- (S91) Erhalten eines 3D-Bilds, welches Werte von wenigstens einer physischen Eigenschaft der geologischen Reservoir-Formation repräsentiert, wobei die Werte der wenigstens einen physischen Eigenschaft aus seismischen Messungen erhalten werden, welche auf die geologische Reservoir-Formation durchgeführt werden;
das Verfahren **dadurch gekennzeichnet, dass** es umfasst:
- (S92) Berechnen eines Skeletts (20) für die Werte der wenigstens einen physischen Eigenschaft auf Grundlage des 3D-Bilds, wobei das Skelett verbundenen Punkten entspricht, welche die Topologie der wenigstens einen physischen Eigenschaft beschreiben;
- (S93) Zuordnen von jedem Punkt des Skeletts zu einer jeweiligen Zelle des stratigrafischen Gitters auf Grundlage der Koordinaten der Punkte des Skeletts und der Koordinaten der Zellen des stratigrafischen Gitters;
- (S94) Bestimmen einer Referenzschicht des stratigrafischen Gitters für wenigstens einen Satz von Punkten des wenigstens einen Skeletts;
- (S95) Berechnen für jeden Punkt des wenigstens einen Satzes eines Schichtabstands zwischen der Referenzschicht und der diesem Punkt zugeordneten Zelle;
- (S96) Korrigieren des Reservoir-Modells auf Grundlage der Schichtabstände.

2. Verfahren (90) nach Anspruch 1, wobei das Korrigieren des Reservoir-Modells ein Korrigieren des stratigrafischen Gitters auf Grundlage der berechneten Schichtabstände umfasst.

3. Verfahren (90) nach Anspruch 1 oder 2, wobei das Reservoir-Modell ein Geschwindigkeitsfeld von seismischen Wellen umfasst, welches der geologischen Reservoir-Formation zugeordnet ist, wobei das Korrigieren des Reservoir-Modells ein Korrigieren des Geschwindigkeitsfelds von seismischen Wellen auf Grundlage der berechneten Schichtabstände umfasst.

4. Verfahren (90) nach einem der vorhergehenden Ansprüche, wobei das Korrigieren des Reservoir-Modells ein Bestimmen eines 3D-Korrekturgitters zum Korrigieren des stratigrafischen Gitters umfasst, wobei das 3D-Korrekturgitter dazu angepasst wird, keine Modifikationen in dem stratigrafischen Gitter auf Zellen zu erzeugen, welche einem oder mehreren Schächten zugeordnet sind, welche in der geologischen Reservoir-Formation gebildet sind.

5. Verfahren (90) nach einem der vorhergehenden Ansprüche, umfassend ein Zerlegen des Skeletts (20) in eine Mehrzahl von Sätzen von Punkten, welche unterschiedlichen Sätzen von Schichtwerten zugeordnet sind, Bestimmen einer Referenzschicht für jeden Satz von Punkten des Skeletts und Berechnen eines Schichtabstands für jeden Punkt von jedem Satz von Punkten auf Grundlage der Referenzschicht, welche dem Satz von Punkten zugeordnet ist.

6. Verfahren (90) nach einem der vorhergehenden Ansprüche, umfassend ein Umwandeln des Skeletts (20) in eine Tiefenskala vor dem Zuordnen von jedem Punkt des Skeletts zu einer Zelle des stratigrafischen Gitters (40), wobei sich das Skelett anfänglich in einer Zeitskala befindet.

7. Verfahren (90) nach Anspruch 6, wobei der Schichtabstand für einen Punkt des Skeletts (20) als die Differenz zwischen der Tiefe der Referenzschicht und der Tiefe der Zelle berechnet wird, welche dem Punkt zugeordnet ist.

8. Verfahren (90) nach einem der Ansprüche 1 bis 5, umfassend ein Umwandeln des stratigrafischen Gitters (40) in eine Zeitskala vor dem Zuordnen von jedem Punkt des Skeletts (20) zu einer Zelle des stratigrafischen Gitters (40), wobei sich das stratigrafische Gitter anfänglich in einer Tiefenskala befeindet.

9. Verfahren (90) nach Anspruch 8, wobei der Schichtabstand für einen Punkt des Skeletts (20) als die Differenz zwischen der Zeit der Referenzschicht und der Zeit der Zelle berechnet wird, welche dem Punkt zugeordnet ist.

10. Verfahren (90) nach einem der Ansprüche 6 bis 9, wobei das Umwandeln in die Zeitskala oder Tiefenskala unter Verwendung eines Geschwindigkeitsfelds einer seismischen Welle des Reservoir-Modells vorgenommen wird.

11. Verfahren (90) nach einem der vorhergehenden Ansprüche, wobei das Berechnen eines Skeletts (20) ein Anwenden eines vorbestimmten Schwellenwerts umfasst, um signifikante Werte der wenigstens einen physischen Eigenschaft in dem 3D-Bild zu identifizieren, wobei das Skelett (20) auf Grundlage der signifikanten Werte der wenigstens einen physischen Eigenschaft berechnet wird.

12. Verfahren (90) nach einem der vorhergehenden Ansprüche, wobei das 3D-Bild einem seismischen 4D-Bild entspricht, wobei die wenigstens eine physische Eigenschaft eine Zeitablauf-Eigenschaft ist, welche die Variation der geologischen Reservoir-Formation zwischen seismischen Messungen repräsentiert, welche in der Zeit separiert sind.

13. Computer-Programmprodukt, welches Anweisungen umfasst, welche wenn sie von wenigstens einem Prozessor ausgeführt werden, den wenigstens einen Prozessor dazu konfigurieren, ein Korrekturverfahren (90) nach einem der vorhergehenden Ansprüche durchzuführen.

14. Computerlesbares Speichermedium, welches Anweisungen umfasst, welche wenn sie von wenigstens einem Prozessor ausgeführt werden, den wenigstens einen Prozessor dazu konfigurieren, ein Korrekturverfahren (90) nach einem der Ansprüche 1 bis 12 durchzuführen.

15. Computersystem zum Korrigieren eines Reservoir-Modells, welches eine geologische Reservoir-Formation modelliert, wobei das Computersystem wenigstens einen Prozessor umfasst, welcher dazu eingerichtet ist, ein Korrekturverfahren (90) nach einem der Ansprüche 1 bis 12 durchzuführen.

## Revendications

1. Procédé mis en oeuvre par ordinateur (90) pour corriger un modèle de réservoir, ledit modèle de réservoir comprenant un maillage stratigraphique (40) modélisant une formation géologique de réservoir, ledit maillage stratigraphique correspondant à un maillage 3D de cellules organisées en couches, ledit modèle de réservoir étant utilisé pour l'extraction d'hydrocarbures à partir de la formation géologique de réservoir, ledit procédé comprenant :
- une obtention (S91) d'une image 3D représentant des valeurs d'au moins une propriété physique de la formation géologique de réservoir, lesdites valeurs de l'au moins une propriété physique étant obtenues à partir de mesures sismiques réalisées sur la formation géologique de réservoir ;
ledit procédé étant **caractérisé en ce qu'**il comprend :
- un calcul (S92) d'un squelette (20) pour les valeurs de l'au moins une propriété physique, sur la base de l'image 3D, ledit squelette correspondant à des points interconnectés décrivant la topologie de l'au moins une propriété physique ;
- une association (S93) de chaque point du squelette à une cellule respective du maillage stratigraphique, sur la base des coordonnées des points du squelette et des coordonnées des cellules du maillage stratigraphique ;
- une détermination (S94) d'une couche de référence du maillage stratigraphique pour au moins un ensemble de points de l'au moins un squelette ;
- une calcul (S95), pour chaque point de l'au moins un ensemble, d'un écartement de couche entre la couche de référence et la cellule associée audit point ;
- une correction (S96) du modèle de réservoir sur la base des écartements de couche.

2. Procédé (90) selon la revendication 1, dans lequel la correction du modèle de réservoir comprend une correction du maillage stratigraphique sur la base des écartements de couche calculés.

3. Procédé (90) selon la revendication 1 ou 2, dans lequel, le modèle de réservoir comprenant un champ de vitesse d'ondes sismiques associé à la formation géologique de réservoir, la correction du modèle de réservoir comprend une correction du champ de vitesse d'ondes sismiques sur la base des écartements de couche calculés.

4. Procédé (90) selon l'une quelconque des revendications précédentes, dans lequel la correction du modèle de réservoir comprend une détermination d'un maillage de correction 3D pour la correction du maillage stratigraphique, ledit maillage de correction 3D étant ajusté pour ne produire aucune modification dans le maillage stratigraphique sur des cellules associées à un ou plusieurs puits réalisés dans la formation géologique de réservoir.

5. Procédé (90) selon l'une quelconque des revendications précédentes, comprenant une décomposition du squelette (20) en une pluralité d'ensembles de points associés à différents ensembles de valeurs de couche, une détermination d'une couche de référence pour chaque ensemble de points du squelette, et un calcul d'un écartement de couche pour chaque point de chaque ensemble de points sur la base de la couche de référence associée audit ensemble de points.

6. Procédé (90) selon l'une quelconque des revendications précédentes, comprenant une conversion du squelette (20) vers une échelle de profondeur avant l'association de chaque point du squelette à une cellule du maillage stratigraphique (40), le squelette étant initialement en échelle de temps.

7. Procédé (90) selon la revendication 6, dans lequel l'écartement de couche pour un point du squelette (20) est calculé comme étant la différence entre la profondeur de la couche de référence et la profondeur de la cellule associée audit point.

8. Procédé (90) selon l'une quelconque des revendications 1 à 5, comprenant une conversion du maillage stratigraphique (40) vers l'échelle de temps avant l'association de chaque point du squelette (20) à une cellule du maillage stratigraphique (40), le maillage stratigraphique étant initialement en échelle de profondeur.

9. Procédé (90) selon la revendication 8, dans lequel l'écartement de couche pour un point du squelette (20) est calculé comme étant la différence entre le temps de la couche de référence et le temps de la cellule associée audit point.

10. Procédé (90) selon l'une quelconque des revendications 6 à 9, dans lequel la conversion en échelle de temps ou en échelle de profondeur est réalisée à l'aide d'un champ de vitesse d'ondes sismiques du modèle de réservoir.

11. Procédé (90) selon l'une quelconque des revendications précédentes, dans lequel le calcul d'un squelette (20) comprend une application d'un seuil prédéterminé afin d'identifier des valeurs significatives de l'au moins une propriété physique dans l'image 3D, le squelette (20) étant calculé sur la base desdites valeurs significatives de l'au moins une propriété physique.

12. Procédé (90) selon l'une quelconque des revendications précédentes, dans lequel l'image 3D correspond à une image sismique 4D dans laquelle l'au moins une propriété physique est une propriété de laps de temps représentative de la variation de la formation géologique de réservoir entre des mesures sismiques séparées dans le temps.

13. Produit programme d'ordinateur comprenant des instructions qui, lorsqu'elles sont exécutées par au moins un processeur, configurent ledit au moins un processeur pour mettre en oeuvre un procédé de correction (90) selon l'une quelconque des revendications précédentes.

14. Support de stockage lisible par ordinateur comprenant des instructions qui, lorsqu'elles sont exécutées par au moins un processeur, configurent ledit au moins un processeur pour mettre en oeuvre un procédé de correction (90) selon l'une quelconque des revendications 1 à 12.

15. Système informatique pour corriger un modèle de réservoir modélisant une formation géologique de réservoir, ledit système d'ordinateur comprenant au moins un processeur configuré pour mettre en oeuvre un procédé de correction (90) selon l'une quelconque des revendications 1 à 12.
